# FASCICULE DE BREVET EUROPEEN

(11) **EP 1 426 747 B1**
(45) Date de publication et mention de la délivrance du brevet: **30.11.2011**
(21) Numéro de dépôt: 03292964.8
(22) Date de dépôt: 28.11.2003
(51) Int. Cl.: G01K 7/22, H01R 13/66

(54) **Capteur de température utilisable dans un environnement soumis à un rayonnement électromagnétique**
In einer Umwelt mit elektromagnetischer Strahlung verwendungsfähiger Temperaturfühler
Temperature sensor for an environment exposed to electromagnetic radiation

(30) Priorité: 02.12.2002 FR 0215125
(43) Date de publication de la demande: 09.06.2004
(73) Titulaire: SC2N, 78180 Montigny-le-Bretonneux (FR)
(72) Inventeur: Castro, Pascal, 14150 Ouistreham (FR)
(74) Mandataire: Texier, Christian

(56) Documents cités:
- DE-A- 19 901 935
- US-A- 4 237 731
- US-B1- 6 379 184
- US-B1- 6 389 903

## Description

L'invention concerne des capteurs de température utilisables notamment dans des environnements soumis à un rayonnement électromagnétique.

Les rayonnements électromagnétiques subis par des capteurs tels que des capteurs de température de type résistif perturbent l'élément sensible permettant de mesurer la grandeur physique qu'est la température. En effet, les rayonnements électromagnétiques génèrent des courants parasites dans les câbles de connexion dudit élément sensible. Ces courants parasites induits traversent alors l'élément sensible. Dans le cas d'un élément résistif sensible à la température, les courants parasites échauffent ce dernier. Ceci a pour inconvénient de fausser la mesure de la température.

Un but de l'invention est de fournir un capteur de température dont l'élément sensible n'est pas perturbé par l'effet des rayonnements électromagnétiques.

A cet effet, on prévoit, selon l'invention, un capteur destiné à mesurer une température, notamment dans un environnement soumis à un rayonnement électromagnétique, comportant au moins un élément sensible apte à mesurer la température et comportant en outre au moins un condensateur associé à l'élément sensible et monté en parallèle avec celui-ci.

Ainsi, le condensateur court-circuite les courants parasites induits du fait de leur haute fréquence. En effet, dans ce cas de figure, le condensateur présente une impédance moindre que celle de l'élément sensible auquel il est associé et monté en parallèle. Par conséquent, l'élément sensible n'étant plus traversé par les courants parasites induits ne s'échauffe pas et la mesure n'est pas faussée.

Avantageusement mais facultativement, le capteur présente au moins l'une des caractéristiques techniques suivantes :
- le capteur comportant une interface avec un circuit auquel le capteur est apte à être relié, le condensateur est monté en parallèle avec l'élément sensible entre l'interface et l'élément sensible,
- le capteur comportant au moins deux languettes de connexion, le condensateur est monté entre les deux languettes de connexion,
- le capteur comportant au moins deux filaments électriques aptes à relier les languettes et l'élément sensible, le condensateur est monté entre les deux filaments électriques,
- le condensateur est un condensateur d'environ 470 nF,
- l'élément sensible est une résistance à coefficient de température négatif, et
- le capteur comportant une sonde, la sonde comprend l'élément sensible et le condensateur.

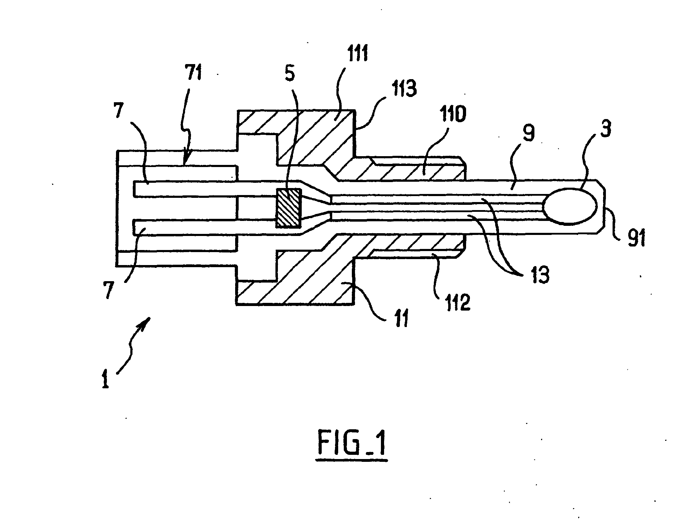

D'autres caractéristiques et avantages de l'invention apparaîtront lors de la description ci-après d'un mode de réalisation préférée de celle-ci. Au dessin annexé, la figure 1 est une vue schématique en coupe d'un capteur de température selon l'invention.

En référence à la figure 1, un capteur de température 1 comporte un corps de sonde 11 présentant une interface 71 à l'une de ses extrémités et une sonde 9 s'étendant en saillie d'une extrémité opposée.

L'interface 71 est destinée à permettre de relier le capteur 1 à un circuit électrique (non représenté). Pour cela l'interface 71 comporte au moins deux languettes de connexion 7 s'étendant en saillie au sein de la zone d'interfaçage 71.

La sonde 9 comprend à une extrémité 91 un élément sensible 3. Dans le cas du capteur de température 1, l'élément sensible 3 est une résistance à coefficient de température négatif. L'élément sensible 3 est relié aux languettes de connexion 7 par des filaments électriques 13, chacun des filaments électriques reliant l'élément sensible 3 à chacune des languettes de connexion 7 respectivement.

Un condensateur 5 est monté, comme illustré à la figure 1, entre les deux languettes de connexion 7, de manière à être installé en parallèle par rapport à l'élément sensible 3.

Dans des variantes de réalisation, le condensateur 5 peut être monté entre les deux filaments électriques 13 de manière à être rapproché de l'élément sensible 3. De manière facultative, le condensateur 5 est un condensateur d'environ 470 nF.

Le corps de sonde 11 présente en outre une partie 110 comprenant un filetage 112 et une partie centrale 111 comprenant un diamètre supérieur au diamètre de la partie 110. Comme illustré à la figure 1, la sonde 9 s'étend en saillie de la partie 110 du corps de sonde 11. Une telle configuration du capteur 1 permet de le monter dans une paroi (non représentée), séparant un environnement au sein duquel on désire réaliser une mesure de température, par le vissage de la partie 110 du cadre 211 dans ladite paroi qui présente une ouverture ayant un filetage complémentaire du filetage 112. Une fois vissée complètement, la partie 111 comportant une face 113, cette dernière vient en appui contre la paroi (non représentée). Ainsi, l'extrémité 91 de la sonde 9 plonge au sein de l'environnement dont on désire mesurer la température alors que, éventuellement, le corps de sonde 11 assure le positionnement du capteur 1 ainsi que l'étanchéité entre l'environnement dont on désire mesurer la température et l'extérieur où s'étend l'interface de connexion 71 du capteur.

Bien entendu, on pourra apporter à l'invention de nombreuses modifications sans pour autant sortir du cadre de celle-ci.

## Revendications

1. Capteur (1) destiné à mesurer une température notamment dans un environnement soumis à un rayonnement électromagnétique, comportant au moins un élément sensible (3) apte à mesurer la température, **caractérisé en ce qu'**il comporte en outre au moins un condensateur (5) associé à l'élément sensible et monté en parallèle avec celui-ci.

2. Capteur selon la revendication 1, **caractérisé en ce que** le capteur comportant une interface (71) avec un circuit auquel le capteur est apte à être relié, le condensateur est monté en parallèle avec l'élément sensible entre l'interface et l'élément sensible.

3. Capteur selon la revendication 1 ou 2, **caractérisé en ce que** le capteur comportant au moins deux languettes de connexion (7), le condensateur est monté entre les deux languettes de connexion.

4. Capteur selon la revendication 3, **caractérisé en ce que** le capteur comportant au moins deux filaments électriques (13) aptes à relier les languettes de connexion et l'élément sensible, le condensateur est monté entre les deux filaments électriques.

5. Capteur selon l'une des revendications 1 à 4, **caractérisé en ce que** le condensateur est un condensateur d'environ 470 nF.

6. Capteur selon l'une des revendications 1 à 5, **caractérisé en ce que** l'élément sensible est une résistance à coefficient de température négatif.

7. Capteur selon l'une des revendications 1 à 6, **caractérisé en ce que** le capteur comportant une sonde (9), la sonde comprend l'élément sensible et le condensateur.

## Claims

1. Sensor (1) intended to measure a temperature, in particular in an environment subject to electromagnetic radiation, comprising at least one sensitive element (3) capable of measuring the temperature, **characterized in that** it also comprises at least one capacitor (5) associated with the sensitive element and mounted in parallel therewith.

2. Sensor according to Claim 1, **characterized in that**, the sensor comprising an interface (71) with a circuit to which the sensor can be linked, the capacitor is mounted in parallel with the sensitive element between the interface and the sensitive element.

3. Sensor according to Claim 1 or 2, **characterized in that**, the sensor comprising at least two connection tabs (7), the capacitor is mounted between the two connection tabs.

4. Sensor according to Claim 3, **characterized in that**, the sensor comprising at least two electrical filaments (13) that can be linked to the connection tabs and the sensitive element, the capacitor is mounted between the two electrical filaments.

5. Sensor according to one of Claims 1 to 4, **characterized in that** the capacitor is a capacitor of approximately 470 nF.

6. Sensor according to one of Claims 1 to 5, **characterized in that** the sensitive element is a resistor with negative temperature coefficient.

7. Sensor according to one of Claims 1 to 6, **characterized in that**, the sensor comprising a probe (9), the probe comprises the sensitive element and the capacitor.

## Patentansprüche

1. Sensor (1), der dazu bestimmt ist, eine Temperatur insbesondere in einer Umgebung zu messen, die einer elektromagnetischen Strahlung ausgesetzt ist, und der wenigstens ein empfindliches Element (3) umfasst, das die Temperatur messen kann, **dadurch gekennzeichnet, dass** er außerdem wenigstens einen Kondensator (5) umfasst, der dem empfindlichen Element zugeordnet ist und zu diesem parallelgeschaltet ist.

2. Sensor nach Anspruch 1, **dadurch gekennzeichnet, dass** der Sensor eine Schnittstelle (71) mit einer Schaltung umfasst, mit der der Sensor verbunden werden kann, wobei der Kondensator zu dem empfindlichen Element zwischen der Schnittstelle und dem empfindlichen Element parallelgeschaltet ist.

3. Sensor nach Anspruch 1 oder 2, **dadurch gekennzeichnet, dass** der Sensor wenigstens zwei Verbindungslaschen (7) aufweist, wobei der Kondensator zwischen die zwei Verbindungslaschen geschaltet ist.

4. Sensor nach Anspruch 3, **dadurch gekennzeichnet, dass** der Kondensator dann, wenn der Sensor wenigstens zwei elektrische Drähte (13) aufweist, die die Verbindungslaschen und das empfindliche Element verbinden können, zwischen diese zwei elektrischen Drähte geschaltet ist.

5. Sensor nach einem der Ansprüche 1 bis 4, **dadurch gekennzeichnet, dass** der Kondensator ein Kondensator mit etwa 470 nF ist.

6. Sensor nach einem der Ansprüche 1 bis 5, **dadurch gekennzeichnet, dass** das empfindliche Element ein Widerstand mit einem negativen Temperaturkoeffizienten ist.

7. Sensor nach einem der Ansprüche 1 bis 6, **dadurch gekennzeichnet, dass** dann, wenn der Sensor einen Messfühler (9) aufweist, dieser Messfühler das empfindliche Element und den Kondensator umfasst.
